# EUROPÄISCHE PATENTSCHRIFT

(11) **EP 2 228 615 B1**
(45) Veröffentlichungstag und Bekanntmachung des Hinweises auf die Patenterteilung: **25.04.2018**
(21) Anmeldenummer: 10155690.0
(22) Anmeldetag: 05.03.2010
(51) Int. Cl.: F01K 25/10, F28D 1/03, F28F 3/02, F28F 3/08, F01N 5/02, F01K 23/06, F28D 9/00, F28F 3/00, F28D 21/00

(54) **Vorrichtung zum Austausch von Wärme, insbesondere zur Wärmerückgewinnung aus Abgasen eines Kraftfahrzeugs**
Plate heat exchanger, in particular for heat recovery from exhaust gases of a motor vehicle
Echangeur de chaleur à plaque, en particulier pour récupération de chaleur d'échappement de véhicule automobile

(30) Priorität: 12.03.2009 DE 102009012493; 27.10.2009 DE 102009050889
(43) Veröffentlichungstag der Anmeldung: 15.09.2010
(73) Patentinhaber: MAHLE Behr GmbH & Co. KG, 70469 Stuttgart (DE)
(72) Erfinder: Diem, Johannes, 71287 Weissach (DE); Geskes, Peter, 73760 Ostfildern (DE); Holdenried, Jens, 71254 Ditzingen (DE); Irmler, Klaus, 72072 Tübingen (DE); Kämmerer, Martin, 73728 Esslingen (DE); Maucher, Ulrich, 70825 Korntal-Münchingen (DE); Pantow, Eberhard, 71364 Winnenden (DE); Schmidt, Michael, 74321 Bietigheim-Bissingen (DE); Brunner, Steffen, 71554 Weissach im Tal (DE)
(74) Vertreter: Grauel, Andreas

(56) Entgegenhaltungen:
- EP-A1- 0 292 245
- EP-A2- 0 497 339
- WO-A1-96/12316
- DE-A1- 10 316 044
- GB-A- 1 277 872
- US-A1- 2005 133 210

## Beschreibung

Die Erfindung betrifft eine Vorrichtung zum Austausch von Wärme nach dem Oberbegriff von Anspruch 1. EP 0 292 245 offenbart eine derartige Vorrichtung. Eine Wärmeenergierückgewinnung aus Abgasen einer Brennkraftmaschine erlangt auch im Bereich des Kraftfahrzeugwesens eine stetig steigende Bedeutung. Insbesondere rückt hierbei die Wärmeenergierückgewinnung mittels Abgasverdampfer immer weiter in den Fokus, um hierbei eine Effizienzsteigerung hinsichtlich des Betriebs der Brennkraftmaschine zu erzielen. In einem Abgasverdampfer wird dem Abgas Wärme entzogen, die einem Kühl- oder Kältemittel zugeführt wird, welches dabei üblicherweise verdampft wird. Die dem Abgas entzogene Wärmeenergie kann dann beispielsweise für einen nachgeschalteten Clausius-Rankine-Prozess verwendet werden.

Beispielsweise beschäftigt sich mit dieser Thematik die Druckschrift DE 601 23 987 T2, in welcher ein Rankine-Zyklussystem im Zusammenhang mit einer Brennkraftmaschine beschrieben ist, bei welchem unter Verwendung eines Verdampfers mittels Wärmeenergie eines Abgases der Brennkraftmaschine ein Hochtemperatur- und Hochdruckdampf erzeugt werden kann.

Es ist Aufgabe vorliegender Erfindung, eine Vorrichtung zum Austausch von Wärme besonders kompakt und effizient zu bauen, insbesondere im Hinblick auf einen Einsatz in einem Kraftfahrzeug.

Die Aufgabe der Erfindung wird von einer Vorrichtung zum Austausch von Wärme mit den Merkmalen des Patentanspruchs 1 gelöst.

Grundgedanke der Erfindung ist es, in einem Scheibenwärmeübertrager die Strömungspfade günstig einbringen zu können, wobei zumindest der erste Strömungspfad und/oder zumindest einzelne der Strömungspfadabschnitte durch Ätzen, Fräsen oder Prägen zumindest einer Oberfläche einer Scheibe eines Scheibenpaares gebildet ist. Durch das Ätzen kann eine einfache Vorgehensweise unter Zulassung von optimierten Geometrien der Strömungspfade erlaubt werden,

Vorteilhaft ist dabei, wenn zumindest der erste Strömungspfad und/oder zumindest einzelne der Strömungspfadabschnitte durch Ätzen zweier gegenüberliegender Oberflächen von zwei Scheiben eines Scheibenpaares gebildet ist. Erfindungsgemäß ist es, wenn der erste und/oder der zweite Strömungspfad und/oder zumindest einzelne deren Strömungspfadabschnitte aus zwei parallel verlaufenden Kanälen besteht, die durch einen Steg voneinander getrennt sind. Weiter erfindungsgemäß weist der Steg zumindest einzelne oder mehrere Unterbrechungen auf. Dadurch, dass der vorliegende Abgasverdampfer in einer sogenannten Sandwichbauweise ausgestaltet ist, bei welcher Abgasebenen und Kühlmittelebenen abwechselnd unmittelbar nebeneinander angeordnet sind, können die Abgasebenen mit den Kühlmittelebenen großflächig in Kontakt treten, so dass ein Wärmeenergleübergang von den Abgasen zu dem Kuhlmittel besonders schnell und effektiv erfolgen kann.

Auf Grund der großen zur Verfügung stehenden Kontaktflächen zwischen einer Abgasseite und einer Verdampferseite des Abgasverdampfers kann dieser zudem sehr kompakt gebaut werden. Dies ist insbesondere im Kraftfahrzeugwesen besonders von Vorteil, da hier Komponenten eines Kraftfahrzeuges möglichst wenig Bauraum einnehmen und zugleich sehr leicht ausgebildet sein sollen. So liegt mittels der Sandwichbauweise vorteilhafter Weise eine sehr leistungsstarke Konstruktion hinsichtlich dem Zusammenspiel der Abgasseite und der Verdampferseite des Abgasverdampfers vor.

Gemäß der vorliegenden Erfindung weist ein erster Strömungsraum einen ersten Strömungspfad mit nacheinander in entgegengesetzten Richtungen durchströmbaren Strömungspfadabschnitten für das erste Medium auf. Die Strömungspfadabschnitte sind erfindungsgemäß durch eine zwischen den zumindest zwei Scheiben des zumindest einen Scheibenpaares angeordnete Trennwand voneinander getrennt.

Bevorzugt ist eine Ausführungsform, bei welcher zwei unmittelbar nacheinander durchströmbare Strömungspfadabschnitte über einen Umlenkabschnitt miteinander verbunden sind. Gemäß einer vorteilhaften Variante ist der Umlenkabschnitt durch eine Aussparung, besonders vorteilhaft einen Durchbruch in der Trennwand gebildet. Gemäß einer anderen vorteilhaften Variante ist der Umlenkabschnitt durch eine zwischen der Trennwand und einer seitlichen Begrenzung des ersten Strömungsraums, besonders vorteilhaft dem Scheibenpaar verbleibenden Lücke gebildet.

Bevorzugt ist eine Ausführungsform, bei welcher zwei oder mehr als zwei Trennwände miteinander einstückig ausgebildet sind. Besonders bevorzugt sind die zwei oder mehr Trennwände durch eine zwischen den zumindest zwei Scheiben des zumindest einen Scheibenpaares angeordnete und insbesondere als Weilblech ausgebildete Zusatzscheibe gebildet. Erfindungsgemäß weist zumindest ein Strömungspfadabschnitt einen, zwei oder mehr als zwei zueinander parallel durchströmbare Strömungskanäle auf. Besonders bevorzugt sind zumindest zwei der Strömungskanäle des zumindest einen Strömungspfadabschnittes über den Umlenkabschnitt miteinander verbunden. Durch eine vorbestimmte Anzahl von parallelgeschalteten Strömungskanälen ist für einen Betrieb der erfindungsgemäßen Vorrichtung ein Druckverlust einerseits und eine Verwelldauer des ersten Mediums in dem ersten Strömungsraum andererseits einstellbar.

Bevorzugt ist eine Ausführungsform, bei welcher die Strömungskanäle an ihren Stirnseiten verschlossen sind, vorteilhaft durch eine Begrenzung des ersten Strömungsraums, besonders vorteilhaft durch eine oder beide Scheiben des Scheibenpaars,

Bevorzugt ist eine Ausführungsform, bei welcher an einer ersten Trennwand eines ersten Strömungskanals an einer ersten Stirnseite des ersten Strömungskanals ein erster Umlenkabschnitt zu einem zweiten Strömungskanal und an einer zweiten Trennwand des ersten Strömungskanals an einer der ersten Stirnseite gegenüberliegenden zweiten Stirnseite des ersten Strömungskanals ein zweiter Umlenkabschnitt zu einem von dem zweiten Strömungskanal unterschiedlichen dritten Strömungskanal angeordnet sind.

Bevorzugt ist eine Ausführungsform, bei welcher die Strömungskanäle gemeinsam mit den Umlenkkanälen einen einzigen serpentinenartig mäandrierenden Strömungspfad durch den ersten Strömungsraum bilden.

Bevorzugt ist eine Ausführungsform, bei welcher der erste und der zweite Strömungsraum in unterschiedlichen Hauptströmungsrichtungen durchströmbar sind.

Bevorzugt ist eine Ausführungsform, bei weicher der zweite Strömungsraum einen größeren Strömungsquerschnitt als ein Strömungspfadabschnitt des Strömungspfades in dem ersten Strömungsraum, insbesondere einen größeren Strömungsquerschnitt als der erste Strömungsraum aufweist. Eine solche Ausführungsform ist insbesondere für den Betrieb mit einem flüssigen, gegebenenfalls verdampfenden ersten Medium und einem gasförmigen zweiten Medium ausgelegt.

Bevorzugt ist die erfindungsgemäße Vorrichtung in ein Kraftfahrzeug mit einem Verbrennungsmotor, einer Abgasleitung eingesetzt und vorteilhaft zum Austausch von Wärme zwischen einem Kühlmittel insbesondere eines Kühl-Kreislaufs des Verbrennungsmotors und dem Abgas oder zwischen einem Kältemittel eines Kältekreislaufs einer Klimaanlage und dem Abgas, wobei das Kühlmittel oder das Kältemittel insbesondere in der Vorrichtung verdampft wird, eingesetzt. Das Abgas ist dabei vorzugsweise das zweite Medium. Bevorzugt sind dabei die ersten Strömungskanäle im Wesentlichen vertikal, besonders bevorzugt im Wesentlichen senkrecht zu einer Standfläche des Kraftfahrzeugs angeordnet.

Unter dem Begriff Abgasanlage" versteht man vorliegend jegliche Komponenten, durch welche Abgase einer Brennkraftmaschine nach dem Verlassen der Brennkraftmaschine geleitet werden. So erfasst der Begriff "Abgasanlage" auch Komponenten einer Abgasrückführung. Insbesondere in einer solchen Abgasrückführung kann der hier beschriebene Abgasverdampfer vorteilhaft integriert sein.

Mit dem Begriff "Kühlmittel" wird jedes verdampfbare Arbeitsmedium beschrieben, mittels welchem Wärmeenergie in ausreichender Menge aufgenommen und transportiert werden kann. Insbesondere Wasser, welches auch als Wasserdampf vorliegen kann, eignet sich hierzu besonders gut.

Der Begriff "Sandwichbauweise" ist im Wesentlichen selbsterklärend, wobei Insbesondere im Zusammenhang mit dem hier beschriebenen Abgasverdampfer klar ist, dass die Abgasebenen mit den Kühlmittelebenen alternierend im bzw. am Abgasverdampfer angeordnet sind, Oftmals wird für den Begriff "Sandwichbauweise" auch die Bezeichnung "Scheibenbauweise" verwendet.

Der Begriff "Trennwand" kann insbesondere auch dahingehend verstanden werden, dass diese Trennwand in zumindest einer Scheibe oder auch in beiden Scheiben des Scheibenpaares angeordnet ist.

Somit ist es auch vorteilhaft, wenn abgasseitig mehr als eine Abgasebene und/oder kühlmittelseitig mehr als eine Kühlmittelebene vorgesehen sind, da ein Wärmeübertrag zwischen den Abgasen und dem Kühlmittel insbesondere mit mehreren Abgas- bzw. Kühlmittelebenen deutlich effektiver realisiert werden kann. Insbesondere die Kühlmittelebenen können parallel geschaltet sein, so dass gewährleistet ist, dass alle Kühlmittelebenen unabhängig voneinander mit Kühlmittel versorgbar sind. Möglich ist aber auch, dass eine oder mehrere Kühlmittelebenen in Reihe zueinander geschaltet sind.

Hierbei stoßen die Abgasebenen und die Kühlmittelebenen vorteilhafter Weise mit ihren jeweiligen Breitseiten unmittelbar aneinander bzw. die Abgasebenen und die Kühlmittelebenen sind lediglich durch eine gut wärmeleitende Trenneinrichtung voneinander abgegrenzt angeordnet. Vorzugsweise ist jede der Kühlmittelebenen beidseits von jeweils einer Abgasebene eingeschlossen, so dass die Kühlmittelebenen immer von zwei Seiten erwärmt bzw. erhitzt werden.

Damit die Abgase einerseits in der Abgasebene und das Kühlmittel andererseits in der Kühlmittelebene vorteilhaft durch den Abgasverdampfer geleitet werden können, sieht eine vorteilhafte Ausführungsvariante vor, dass der Abgasverdampfer abgasseitig eine Abgasleiteinrichtung und/oder verdampferseitig eine Kühlmittelleiteinrichtung aufweist, welche räumlich voneinander getrennt sind.

Die Kühlmittel können hierbei besonders vorteilhaft entlang und in der Kühlmittelebene geleitet werden, wenn in jeder der Kühlmittelebenen mehrere parallel zueinander verlaufende Kühlmittelkanäle, wie Strömungskanäle, angeordnet sind. Hierbei können insbesondere lange, enge Kühlmittelkanäle vorteilhaft vorgesehen werden, in welchen sich das Kühlmittel schnell erhitzen kann.

Allein schon durch die beschriebene Sandwichbauweise, bei welcher Abgasebenen und Kühlmittelebenen direkt nebeneinander angeordnet sein können, kann eine hohe Leistung hinsichtlich des Abgasverdampfers bei einem nur gering benötigten Bauraum erzielt werden. Dadurch, dass vorliegend zusätzlich Abgaskanäle bzw. Kühlmittelkanäle in den einzelnen Ebenen des Abgasverdampfers vorgesehen werden können, kann selbst bei sehr knapp vorgegebenen Bauraumrandbedingungen eine hohe Leistung bzw. eine Leistungssteigerung erzielt werden.

Entsprechend vorteilhaft ist es, wenn zum Leiten der Abgase auch in der Abgasebene mehrere parallel zueinander verlaufende Abgaskanäle angeordnet sind. Beispielsweise können diese Abgaskanäle hinsichtlich ihrer Stirnseiten von einer Abgasverdampfereingangsseite zu einer Abgasverdampferausgangsseite linear durch den Abgasverdampfer verlaufen. Die Abgaskanäle sind an ihren Stirnseiten jeweils geöffnet, so dass die Abgase über Öffnungen in den Stirnseiten in die Abgaskanäle einströmen und wieder herausströmen können. Hierbei ist vorzugsweise eine Vielzahl an Abgaskanäle in der Abgasebene nebeneinander angeordnet, so dass mehrere Abgaskanäle zwischen einem ersten Seitenbereich und einem zweiten Seitenbereich angeordnet sind. So können die Abgase breitflächig in der Vielzahl der Abgaskanäle in eine erste Hauptströmungsrichtung durch den Abgasverdampfer hindurch geleitet werden.

Der Abgasverdampfer kann hierbei besonders einfach konstruiert werden, wenn die Kühlmittelkanäle auf der Verdampferseite ähnlich oder sogar identisch ausgerichtet angeordnet sind, wie die Abgaskanäle auf der Abgasseite.

Damit jedoch das Kühlmittel Wärmeenergie aus den Abgasen besonders effektiv aufnehmen kann, ist es vorteilhaft, wenn das Kühlmittel ausreichend lang in dem Abgasverdampfer verweilen kann. Dies kann beispielsweise einerseits realisiert werden, indem das Kühlmittel mit einer geringeren Strömungsgeschwindigkeit den Abgasverdampfer passiert. Andererseits kann der Abgasverdampfer länger ausgebildet werden. Eine bevorzugte Ausführungsvariante sieht vor, dass das Kühlmittel in dem Abgasverdampfer in einer Kühlmittelebene eine besonders lange Wegstrecke durch den Abgasverdampfer zurück legen kann. Baulich besonders einfach kann eine solch lange Wegstrecke in einer Kühlmittelebene realisiert werden, wenn die Kühlmittelkanäle räumlich untereinander verbunden sind. Durch die räumliche Verbindung kann das Kühlmittel von einem Kühlmittelkanal zu einem weiteren Kühlmittelkanal strömen und somit zeitlich besonders lang in dem Abgasverdampfer verweilen.

Insbesondere in diesem Zusammenhang ist es vorteilhaft, wenn die Kühlmittelkanäle an ihren Stirnseiten verschlossen sind. Hierdurch ist es nicht erforderlich, dass Öffnungen an Stirnseiten beispielsweise zweier unmittelbar nebeneinander und/oder miteinander korrespondierender Kühlmitteikanäle durch eine geeignete Verrohrung miteinander verbunden werden müssen. Vielmehr können geeignete Verbindungsöffnungen zwischen zwei Kühlmittelkanälen in einer gemeinsamen Trennwand vorgesehen sein.

So sieht eine bevorzugte Ausführungsvariante auch vor, dass an einer ersten Trennwand eines ersten Kühlmittelkanals an der ersten Stirnseite des ersten Kühlmittelkanals eine erste Verbindungsöffnung zu einem zweiten Kühlmittelkanal und an einer zweiten Trennwand des ersten Kühlmitteikanals an einer zweiten Stirnseite des ersten Kühlmittelkanals eine zweite Verbindungsöffnung zu einem weiteren Kühlmittelkanal angeordnet sind. Hierdurch können alle Kühlmitteikanäle einer Kühlmittelebene zu einer mäandrierenden Kühlmittelwegstrecke zusammengefasst werden. Grundsätzlich können solche Verbindungsöffnungen an jeder Trennwand vorgesehen sein. Auch können Kühlkanäle parallel geschaltet werden, in dem die Verbindungsöffnungen in geeigneter Weise an den Trennwänden und/oder an den Stirnseiten vorgesehen werden.

Um eine möglichst lange Kühlmlttelwegstrecke in einer der Kühlmittelebenen bereitstellen zu können, ist es deshalb vorteilhaft, wenn die Kühlmittelkanäle gemeinsam eine einzige mäandrierende Kühlmittelwegstrecke durch den Abgasverdampfer bilden.

Weiter ist es vorteilhaft, wenn der Abgasverdampfer eine Kühlmittelwegstrecke und eine Abgaswegstrecke aufweist, wobei die Kühlmittelwegstrecke anders orientiert in dem Abgasverdampfer angeordnet ist als die Abgaswegstrecke. Hierdurch können die Abgase und das Kühlmittel beispielsweise im Kreuzstrom den Abgasverdampfer durchströmen. Es ist klar, dass die Abgase und die Kühlmittel bei entsprechend gewählten Kanälen auch im Gegenstrom zueinander strömen könnten.

Gerade in diesem Zusammenhang wird die Aufgabe der Erfindung auch von einem Verfahren zum Betreiben einer Brennkraftmaschine eines Kraftfahrzeuges gelöst, bei welchem Abgase der Brennkraftmaschine mittels einer Abgasanlage in die Umgebung geleitet werden und den Abgasen zuvor mittels verdampfbarer Kühlmittel Wärmeenergie entzogen wird, und bei welchem die Abgase innerhalb eines Abgasverdampfers in eine erste Hauptströmungsrichtung und die Kühlmittel in eine der ersten Hauptströmungsrichtung entgegen gesetzte Hauptströmungsrichtung durch den Abgasverdampfer hindurch geleitet werden, wobei die Kühlmittel streckenweise quer zu den Hauptströmungsrichtungen durch den Abgasverdampfer hindurch geleitet werden. Vorteilhafter Weise werden die Abgase und das Kühlmittel hierbei nicht nur im Gegenstrom zueinander durch den Abgasverdampfer hindurch bewegt, sondern auch im Kreuzstrom, wodurch insbesondere das Kühlmittel zeitlich besonders lang in dem Abgasverdampfer verbleiben und sich hierbei besonders gut erwärmen bzw. erhitzen kann.

Es versteht sich, dass sowohl die Abgaskanäle als auch die Kühlmittelkanäle unterschiedlich in dem Abgasverdampfer angeordnet sein können. Um insbesondere die Gefahr zu verringern, dass es in einem der Kühlmittelkanäle zu einer kritischen Ansammlung von Flüssigkeit, insbesondere von Wasser, kommen kann, ist es vorteilhaft, wenn die Kühlmittelkanäle im Wesentlichen vertikal ausgerichtet innerhalb des Abgasverdampfers, Insbesondere im Wesentlichen vertikal zu einer Fahrbahnoberfläche, angeordnet sind.

Mittels der Verbindungsöffnungen, welche idealerweise sehr nahe an den Stirnseitenwandungen angeordnet sind, kann zudem vermieden werden, dass an der Unterseite einer Kühtmittelebene Sammelbecken für etwa noch nicht verdampftes Wasser entstehen. Hierdurch kann die Gefahr einer Leistungsverminderung des Abgasverdampfers auf Grund solcher Wassersammelstellen vermieden werden. Bei einer diesbezüglich besonders vorteilhaften Ausführungsvariante kann vorgesehen sein, dass zusätzlich zu den Verbindungsöffnungen auch insbesondere eine Einlassöffnung der Kühlmittelebenen an der Unterseite platziert ist, so dass betriebssicher gewährleistet werden kann, dass die Kühlmittelkanäle einer Kühlmittelebene anfänglich mit Kühlmittel, insbesondere mit Wasser, versorgt sein können. Das heißt, an allen Kühlmittelkanälen des Abgasverdampfers steht vor einer Inbetriebnahme einer Brennkraftmaschine idealerweise Kühlmittel zur Verfügung, so dass eine gleichmäßige Verdampfung des Kühlmittels in den Kühlmittelebenen gewährleistet werden kann.

Solange eine kritische Wasseransammlung in einem der Kühlmittelkanäle bzw. einer der Kühlmittelebenen vermieden werden kann, ist es möglich, die Kühlmittelkanäle bzw. die Kühlmittelebenen auch aus einer vertikalen Ausrichtung heraus ausgelenkt in dem Abgasverdampfer vorzusehen. Ein entsprechend einzustellender unkritischer Neigungswinkel des Abgasverdampfers, bei welchem noch vermieden ist, dass etwa ein Randkühlmittelkanal und/oder eine Randkühlmittelebene mit Wasser kritisch geflutet ist, aber ein gegenüberliegender Randkühlmittelkanal und/oder eine gegenüberliegende Randkühlmittelebene nicht, kann ein solcher noch erlaubter und unkritischer Neigungswinkel vorsorglich um mehr als 5°, idealerweise um ca. 10°, reduziert werden, so dass ungünstigen Schräglagen, beispielsweise auf Grund eines geneigten Einbaus einer Brennkraftmaschine, einer Abgasanlage in einem Kraftfahrzeug und/oder einer ungünstigen Schräglage des Fahrzeuges an sich, vorgebeugt werden kann.

Mit der Begriffsergänzung "Rand" können Kühlmittelkanäle und/oder Kühlmittelebenen zusätzlich gekennzeichnet werden, welche gegenüber den übrigen Kühlmittelkanälen bzw. Kühlmittelebenen außen am Abgasverdampfer angeordnet sind.

Der vorstehend erwähnte Neigungswinkel kann idealerweise von einer Vertikalebene aus gemessen werden.

Somit kann besonders sichergestellt werden, dass anfänglich alle Kühlmittelkanäle mit einem flüssigen Kühlmittel bzw. mit Wasser versorgt sind. Hierdurch wird die Gefahr verringert, dass beispielsweise ein anfänglich nicht mit Wasser versorgter Kühlmittelkanal das verdampfende Wasser alleine fördert.

Die Kanäle eines Abgasverdampfers können vielfältig gebildet und ausgestaltet sein. Beispielsweise können insbesondere die Kühlmittelkanäle als Rohrbündel oder in Plattenbauweise mit Trennstegen ausgebildet sein. Baulich besonders einfach ist der Abgasverdampfer herstellbar, wenn Kühlmittelkanäle einer Kühlmittelebene mittels eines in der Ebene mehrfach gefalteten Wellblechs gebildet sind.

Ein solches Wellblech kann beispielsweise im Verbund mit parallel zu den vorliegenden Ebenen angeordneten Trennblechen vorteilhaft die hier beschriebenen Kanäle bilden, wobei die Abgaskanäle auch besonders einfach mittels an einem solchen Trennblech angeordneten Trennstegen realisiert werden können.

Um möglichst wenig Strömungsverluste innerhalb der Kanäle zu haben, können bei einer anderen vorteilhaften Ausführungsvariante glatte Kanalwandungen vorgesehen sein. Insbesondere können durch unterschiedlich gewählte Dimensionierungen der Kanalseitenwandungen bzw. Kanalbodenwandungen die Abmessungen der Kühlkanäle nahezu beliebig beeinflusst werden.

Beispielsweise kann eine Änderung der Kanalbreite einen Druckverlust und/oder eine Veränderung der Wärmeenergieübertragungsfläche mit sich bringen. Auch kann die Breite der Kanäle die Kanalanzahl in einem Abgasverdampfer und/oder die Gesamtwegstrecke einer Kühlmittelwegstrecke einer Kühlmittelebene beeinflussen.

Auch die Abgasleiteinrichtung und die Kühlmittelleiteinrichtung können baulich vielfältig gestaltet sein. Aus den heißen Abgasen kann Wärmeenergie besonders gut in das Kühlmittel übergehen, wenn die Abgasleiteinrichtung in einer Abgasebene im Parallelstrom und die Kühlmittelleiteinrichtung in einer Kühlmittelebene im Serpentinenstrom ausgebildet sind. Dadurch, dass die Abgasleiteinrichtung im Parallelstrom durchströmt wird, können die Abgase den Abgasverdampfer beispielsweise mit hoher Geschwindigkeit und unkritischem Staudruck passieren, während das Kühlmittel durch den Serpentinenstrom ausreichend lang in dem Abgasverdampfer verweilen kann, so dass es die Wärmeenergie besonders effektiv aufnehmen kann.

Es versteht sich, dass je nach Anwendungsfall noch weitere vorteilhafte Ausgestaltungen an dem vorliegenden Abgasverdampfer vorgenommen werden können. Insbesondere die Strömungsführung in Abgasverdampfern kann ein ausschlaggebendes Kriterium für eine besonders gute Leistungsfähigkeit sein. Darüber hinaus kann mit entsprechend steif ausgebildeten Kanälen die Festigkeit eines Abgasverdampfers wesentlich beeinflusst werden.

Die Leistungsfähigkeit kann hierbei in zwei Optimierungsrichtungen verlaufen. Zum einen will man einen minimalen Druckverlust erzielen, indem möglichst keine Umlenkungen noch innere Strukturen innerhalb einer Wegstrecke vorhanden sind. Zum anderen soll eine möglichst große Fläche für eine Wärmeenergieübertragung zur Verfügung stehen. Für den Druckverlust sollte zusätzlich beachtet werden, dass das Arbeitsmedium seine Dichte mit der Änderung des Aggregatzustandes, insbesondere von flüssig zu gasförmig, sehr verringert und dies die Strömungsgeschwindigkeit vervielfachen kann.

Es muss daher ein spezifisches Optimum zwischen Druckverlust und Wärmeleistung gefunden werden.

Insbesondere bei Abgasverdampfern ist die Festigkeit, wie vorstehend bereits erwähnt, ein weiteres wichtiges Thema, da das Arbeitsmedium, insbesondere ein Kühlmittel, meist bei Arbeitsdrücken über dem Umgebungsdruck betrieben werden muss, um eine ausreichend gute Effektivität im Zusammenhang mit dem Abgasverdampfer erzielen zu können. Somit müssen auch die gewählten Geometrien der verwendeten Bauteile etwa die durch die auftretenden Arbeitsdrücke entstehenden Drückkräfte problemlos aufnehmen können. Thermische Spannungen, etwa hervorgerufen durch Temperaturdifferenzen zwischen den beiden Arbeitsmedien, also den Abgasen einerseits und dem Kühlmittel andererseits, müssen ebenfalls aufgenommen werden können. Auch die gewählte Blechdicke eines Wellbleches hat einen direkten Einfluss auf die Festigkeit, insbesondere wenn einzelne Blechbereiche des Abgasverdampfers als Zuganker verwendet werden. Weiter kann sich die Blechdicke auf die Wärmeleitfähigkeit auswirken.

Eine weitere Möglichkeit, die Effektivität zu steigern kann darin liegen, dass in den Kanälen turbulenzerzeugende Gebilde vorgesehen werden. Durch den vorstehend beschriebenen Aufbau des vorliegenden Abgasverdampfers, insbesondere im Hinblick auf ein in einer Ebene mehrfach gefaltetes Wellblech, kann dies problemlos gewährleistet werden.

Der hier beschriebene Abgasverdampfer kann in nahezu allen Kraftfahrzeugen vorteilhaft eingesetzt werden, insbesondere auch in Nutzkraftwagen.

Weitere Vorteile, Ziele und Eigenschaften vorliegender Erfindung werden anhand nachfolgender Beschreibung anliegender Zeichnung erläutert, in welcher beispielhaft ein Abgasverdampfer dargestellt ist. Es zeigen
- Figur 1: schematisch eine Ansicht eines Kraftfahrzeuges mit einer Brennkraftmaschine und einer Abgasanlage mit einem Abgasverdampfer,
- Figur 2: schematisch eine perspektivische Ansicht des Abgasverdampfers aus der Figur 1,
- Figur 3: schematisch eine teilweise geschnittene Ansicht des Abgasverdampfers aus den Figuren 1 und 2,
- Figur 4: schematisch eine perspektivische Ansicht eines Wellbleches des Abgasverdampfers aus den Figuren 1 bis 3 zum Realisieren einer ersten Kühlmittelebene,
- Figur 5: eine perspektivische Ansicht eines alternativen Wellbleches,
- Figur 6: eine perspektivische Ansicht eines Ausschnitts einer Scheibe mit Strömungspfad,
- Figur 7: eine perspektivische Ansicht eines Scheibenpaares mit Strömungspfaden,
- Figur 8: eine Ansicht einer Scheibe mit Strömungspfad.
- Figur 9: eine Ansicht eines Ausschnitts einer Scheibe mit Strömungspfad,
- Figur 10: eine perspektivische Ansicht einer Vorrichtung mit aufeinander gestapelten Scheiben,
- Figur 11: eine schematische Ansicht aufeinander gestapelter Scheiben im Querschnitt mit Strömungspfad, und
- Figur 12: eine schematische Ansicht zweier Blöcke aus aufeinander gestapelter Scheiben mit Strömungspfad.

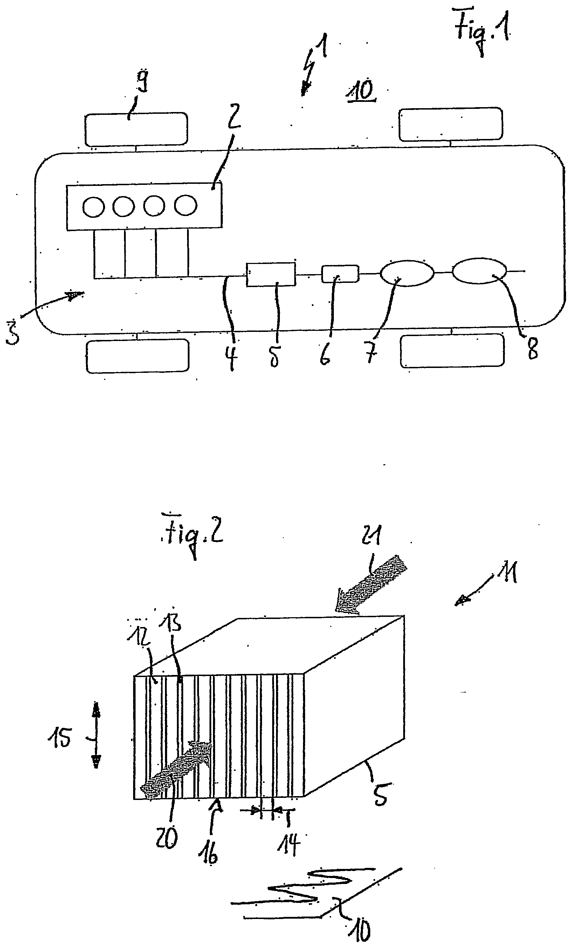

Das in der Figur 1 gezeigte Kraftfahrzeug 1 umfasst eine Brennkraftmaschine 2 mit einer nachgeschalteten Abgasanlage 3, bei weicher in diesem Ausführungsbeispiel in einem Abgasstrang 4 ein Abgasverdampfer 6, eine Abgasnachbehandlung 5, ein Mittelschalldämpfer 7 und ein Endschalldämpfer 8 angeordnet sind. Das Kraftfahrzeug 1 steht mit vier Rädern 9 (hier nur exemplarisch beziffert) auf einem Fahrbahnuntergrund 10, welcher nach der Darstellung der Figur 1 in der Papierebene liegt.

Der Abgasverdampfer 6 ist in den Figuren 2 bis 4 schematisch detailierter dargestellt, wobei insbesondere in der Figur 2 die Sandwichbauweise 11 des Abgasverdampfers 6 deutlich mit seinen vielen Abgasebenen 12 (hier nur exemplarisch beziffert) und mit seinen vielen Kühlmittelebenen 13 (hier ebenfalls nur exemplarisch beziffert) zu erkennen ist. Die Abgasebenen 12 sind hierbei hinsichtlich ihrer Dicke 14 etwas stärker ausgebildet als die schmaleren Kühlmittelebenen 13, so dass Abgase die Abgasebenen 12 leichter passieren können, Vorteilhafter Weise sind in der hier gewählten Sandwichbauweise 11 die beiden äußeren Ebenen Abgasebenen 12, so dass gewährleistet ist, dass alle Kühlmittelebenen 13 beidseitig von Abgasebenen 12 umschlossen sind. Hierdurch kann das Kühlmittel in den Kühlmittelebenen 13 besonders schnell erhitzt werden.

Sowohl die Kühlmittelebenen 13 als auch die Abgasebenen 12 sind in dem Abgasverdampfer 6 in vertikaler Ausrichtung 15 angeordnet, wobei die Unterseite 16 des Abgasverdampfers 6 dem Fahrbahnuntergrund 10 zugewandt ist. Gemäß der Sandwichbauweise 11 des vorliegenden Abgasverdampfers 6 folgt auf eine Abgasebene 12 eine Kühimittelebene 13.

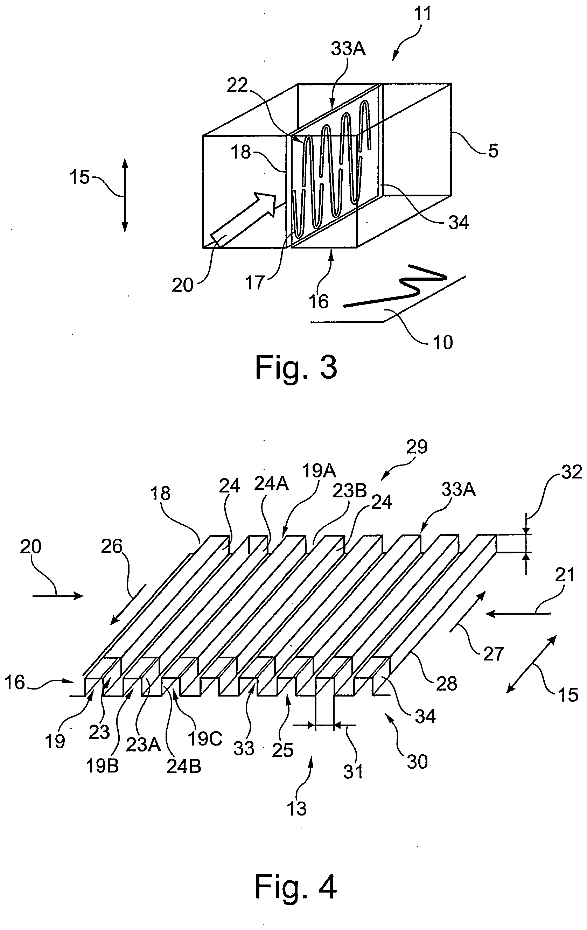

Das Kühlmittel, welches in diesem Ausführungsbeispiel Wasser bzw. im erhitzten Zustand Wasserdampf 17 (siehe Figur 3) ist, gelangt über eine Einlassöffnung 18 (siehe Figur 4) in einen Kühlmittelkanal 19 gemäß einer Hauptströmungsrichtung 20. Das Kühimittel mäandriert in den Kühlmittelebenen 13 durch den Abgasverdampfer 6 und nimmt hierbei mehr und mehr Wärmeenergie aus den Abgasen auf, welche die Abgasebenen 12 gemäß der Hauptströmungsrichtung 21 im Wesentlichen linear durchströmen.

Während das Kühlmittel entlang einer Kühimlttelwegstrecke 22 mäandrierend durch die Kühlmittelebene 13 strömt, gelangt es über Verbinciungsöffnungen 23 (hier nur exemplarisch beziffert) durch einzelne Trennwände 24 (hier nur exemplarisch beziffert) jeweils in weitere Kühlmittelkanäle 25 (hier nur exemplarisch beziffert) der Kühlmittelebenen 13 und schlängelt sich so entlang der Hauptströmungsrichtung 20. Alle Kühlmittelkanäle 19 und 25 sind im Wesentlichen parallel zueinander und im Wesentlichen in vertikaler Ausrichtung 15 in der jeweiligen Kühlmittelebene 13 angeordnet. Hierbei werden die Kühlkanäle 19 bzw. 25 entweder in einer ersten Nebenströmungsrichtung 26 oder in einer zweiten Nebenströmungsrichtung 27 durchströmt, welche quer zu den beiden Hauptströmungsrichtungen 20 und 21 verlaufen.

Eine Kühlmittelleiteinrichtung 28, wie sie in einer der Kühlmlittelebenen 13 des Abgasverdampfers 6 mehrere Kühlkanäle 19 bzw. 25 bereit stellen kann, besteht hier aus einem Wellblech 29 mit einer Glattrippengeometrie 30. Mittels des Wellblechs 29 ist die Kühlmittelleiteinrichtung 28 baulich besonders einfach bereit gestellt, Es versteht sich, dass je nach dem wie die Glattrippengeometrie 30 hinsichtlich einer Rippenbreite 31 und/oder einer Rippenhöhe 32 gewählt wird, die Gesamtlänge der Kühlmittelwegstrecke 22 und die Anzahl der Kühlmittelkanäle 19, 25 variiert werden können. Hierbei bestimmen die Rippenhöhe 32 insbesondere eine Kühlmittelkanalhöhe und die Rippenbreite 31 die Kühlmittelkanalbreite, welche beide nicht explizit eingezeichnet sind, da sie sich im Wesentlichen aus der Rippenhöhe 32 bzw. der Rippenbreite 31 ergeben.

Die Kühlmittelkanäle 19, 25 sind an ihren Stirnseiten 33, 33A verschlossen (hier nicht dargestellt, aber exemplarisch beziffert), so dass das Kühlmittel nur über die Verbindungsöffnungen 23 von einem Kühlmittelkanal 19 in die weiteren Kühlmittelkanäle 25 strömen Kann, bis das Kühlmittel die Kühlmittelebene 13 über eine Auslassöffnung 34 der Kühlmittelleiteinrichtung 28 wieder verlässt. Somit wird mittels der Verbindungsöffnungen 23 eine Umlenkung des Kühlmittels entlang der Kühlmittelwegstrecke 22 Innerhalb der Kühlmittelebene 13 erzielt.

In dem konkreten Ausführungsbeispiel nach der Figur 4 sind somit an einer ersten Trennwand 24A eines ersten Kühlmittelkanals 19A an der ersten Stirnseite 33 des ersten Kühlmittelkanals 19A eine erste Verbindungsöffnung 23A zu einem zweiten Kühlmittelkanal 19B und an einer zweiten Trennwand 24B des ersten Kühlmittelkanals 19A an einer zweiten Stirnseite 33A des ersten Kühlmittelkanals 19A eine zweite Verbindungsöffnung 23B zu einem weiteren Kühlmittelkanal 19C angeordnet.

Eine Abgasleiteinrichtung ist vorliegend nicht dargestellt, da sie konstruktiv einfach im Wesentlichen aus geradlinig ausgebildeten Abgaskanälen besteht, deren Stirnseiten nicht verschlossen sind, so dass hierüber die Abgase in die Abgaskanäle einströmen und auch wieder aus den Abgaskanälen ausströmen können. Die Abgasleiteinrichtung kann auch aus einem Wellblech hergestellt sein, jedoch ohne die vorstehend beschriebenen Verbindungsöffnungen 23, Dadurch, dass an der Abgasleiteinrichtung mehrere Abgaskanäle parallel geschaltet sind, ist die Abgasleiteinrichtung in diesem Ausführungsbeispiel mehrflutig ausgelegt, Im Gegensatz hierzu sind die Kühlmittelkanäle 19, 25 an der Kühlmittelleiteinrichtung 28 in Reihe geschaltet, da das Kühlmittel alle Kühlmittelkanäle 19, 25 nacheinander durchströmt. Somit ist die Kühlmittelleiteinrichtung 28 in diesem Ausführungsbeispiel einflutig konstruiert.

Es versteht sich, dass der beschriebene Abgasverdampfer 6 nur ein erstes Ausführungsbeispiel darstellt, jedoch nicht einschränkend hinsichtlich der Erfindung zu verstehen ist.

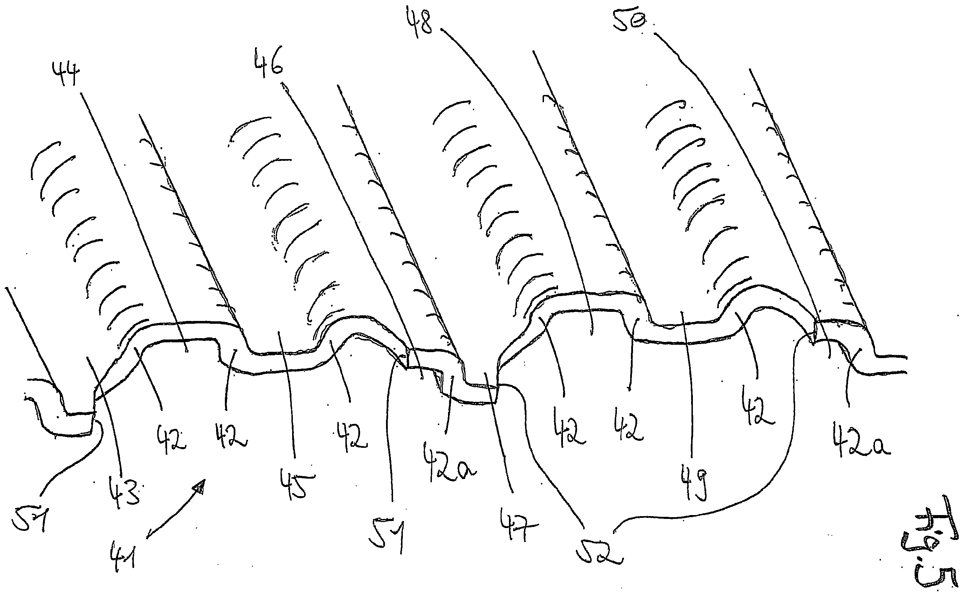

Fig. 5 zeigt eine als Wellblech 41 ausgebildete Zusatzscheibe, welche in eine nicht weiter dargestellte Vorrichtung zum Austausch von Wärme gemäß der vorliegenden Erfindung eingesetzt ist. Das Wellblech 41 weist einstückig miteinander ausgebildete Trennwände 42, 42a auf, welche Strömungskanäle 43, 44, 45, 46, 47, 48, 49, 50 voneinander trennen. Hierbei bilden die Strömungskanäle 43 und 45 einen ersten Strömungspfadabschnitt, die Strömungskanäle 44 und 46 einen zweiten Strömungspfadabschnitt, die Strömungskanäle 47 und 49 einen dritten Strömungspfadabschnitt und die Strömungskanäle 48 und 50 einen vierten Strömungspfadabschnitt.

Der erste und der dritte Strömungspfadabschnitt werden dabei beispielsweise auf den Betrachter zu durchströmt, wohingegen der zweite und der vierte Strömungspfadabschnitt vom Betrachter weg durchströmt werden. Der erste Strömungspfadabschnitt 43, 45 ist dabei mit dem zweiten Strömungspfadabschnitt 44, 46 über einen durch eine Aussparung 51 gebildeten Umlenkabschnitt verbunden. Der zweite Strömungspfadabschnitt 44, 46 ist mit dem dritten Strömungspfadabschnitt 47, 49 über einen nicht gezeigten Umlenkabschnitt verbunden. Der dritte Strömungspfadabschnitt 47, 49 ist wiederum mit dem vierten Strömungspfadabschnitt 48, 50 über einen durch eine Aussparung 52 gebildeten Umlenkabschnitt verbunden. Durch die Aussparungen 51, 52 ergeben sich die Umlenkabschnitte bildende Lücken zwischen den Trennwänden 42 und einer nicht gezeigten, die Strömungskanäle auf ihrer dem Betrachter zugewandten Stirnseite verschließenden Seitenwand des ersten Strömungsraums, in welchem das Wellblech 51 angeordnet ist.

Die Trennwände 42a sind dagegen mit der Seitenwand verbunden, so dass die Strömungspfadabschnitte in der erwähnten Reihenfolge und abwechselnd in entgegengesetzten Strömungsrichtungen durchströmt werden. Somit ergibt sich für das erste Medium ein einziger serpentinenartig mäandrierender Strömungspfad durch den ersten Strömungsraum, welcher durch eine Hintereinanderschaltung der Strömungspfadabschnitte gebildet wird.

Insbesondere wird die Aufgabe der Erfindung auch durch eine Abgasanlage mit einem Abgasverdampfer gelöst, welche einer Brennkraftmaschine eines Kraftfahrzeuges nachgeschaltet ist, wobei der Abgasverdampfer eine Sandwichbauweise aufweist, bei welcher Abgasebenen und Kühlmittelehenen abwechselnd unmittelbar nebeneinander angeordnet sind, wobei der Abgasverdampfer bevorzugt abgasseitig eine Abgasleiteinrichtung und verdampferseitig eine Kühlmittelleiteinrichtung aufweist, welche räumlich voneinander getrennt sind, wobei bevorzugt in jeder der Kühlmittelebenen mehrere parallel zueinander verlaufende Kühlmittelkanäle angeordnet sind, die insbesondere räumlich untereinander verbunden sind, wobei die Kühlmittelkanäle bevorzugt an ihren Stirnseiten verschlossen sind.

Bevorzugt sind an einer ersten Trennwand eines ersten Kühlmittelkanals an einer ersten Stirnseite des ersten Kühlmittelkanals eine erste Verbindungsöffnung zu einem zweiten Kühlmittelkanal und an einer zweiten Trennwand des ersten Kühlmittelkanals an einer zweiten Stirnseite des ersten Kühlmittelkanals eine zweite Verbindungsöffnung zu einem weiteren Kühlmittelkanal angeordnet, wobei die Kühlmittelkanäle bevorzugt gemeinsam eine einzige mäandrierende Kühlmittelwegstrecke durch den Abgasverdampfer bilden und/oder im Wesentlichen vertikal ausgerichtet innerhalb des Abgasverdampfers, insbesondere im Wesentlichen vertikal zu einer Fahrbahnoberfläche, angeordnet sind, wobei der Abgasverdampfer bevorzugt eine Kühlmittelwegstrecke und eine Abgaswegstrecke aufweist, wobei die Kühlmittelwegstrecke anders orientiert in dem Abgasverdampfer angeordnet ist als die Abgaswegstrecke.

Bevorzugt sind Kühlmittelkanäle einer Kühlmittelebene mittels eines in der Kühlmittelebene mehrfach gefalteten Wellblechs gebildet und/oder die Abgasleiteinrichtung mehrflutig und die Kühlmittelleiteinrichtung einflutig ausgebildet ist.

Insbesondere wird die Aufgabe der Erfindung auch durch ein Verfahren zum Betreiben einer Brennkraftmaschine eines Kraftfahrzeuges gelöst, bei welchem Abgase der Brennkraftmaschine mittels einer Abgasanlage in die Umgebung geleitet werden und den Abgasen zuvor mittels verdampfbarer Kühlmittel Wärmeenergie entzogen wird, wobei die Abgase innerhalb eines Abgasverdampfers in einer ersten Hauptströmungsrichtung und die Kühlmittel in einer der ersten Hauptströmungsrichtung entgegengesetzten Hauptströmungsrichtung durch den Abgasverdampfer hindurch geleitet werden, wobei die Kühlmittel streckenweise quer zu den Hauptströmungsrichtungen durch den Abgasverdampfer hindurch geleitet werden.

Vorrichtung zum Austausch von Wärme zwischen einem ersten und einem zweiten Medium, mit in einer Stapelrichtung aufeinandergestapelten Scheibenpaaren, wobei zwischen den zwei Scheiben zumindest eines Scheibenpaares ein von einem ersten Medium durchströmbarer erster Strömungsraum und zwischen zwei zueinander benachbarten Scheibenpaaren ein von einem zweiten Medium durchströmbarer zweiter Strömungsraum ausgebildet sind, wobei der erste Strömungsraum einen ersten Strömungspfad mit nacheinander in entgegengesetzten Richtungen durchströmbaren Strömungspfadabschnitten für das erste Medium aufweist, welche durch eine zwischen den zumindest zwei Scheiben des zumindest einen Scheibenpaares angeordnete Trennwand voneinander getrennt sind. Dabei ist es zweckmäßig, wenn zwei unmittelbar nacheinander durchströmbare Strömungspfadabschnitte über einen Umlenkabschnitt miteinander verbunden sind. Auch ist es zweckmäßig, wenn der Umlenkabschnitt durch eine Aussparung, insbesondere einen Durchbruch in der Trennwand gebildet ist. Auch ist es zweckmäßig, wenn der Umlenkabschnitt durch eine zwischen der Trennwand und einer seitlichen Begrenzung des ersten Strömungsraums, insbesondere dem Scheibenpaar verbleibenden Lücke gebildet ist. Auch ist es zweckmäßig, wenn zwei oder mehr als zwei Trennwände miteinander einstückig ausgebildet sind. Auch ist es zweckmäßig, wenn die zwei oder mehr Trennwände durch eine zwischen den zumindest zwei Scheiben des zumindest einen Scheibenpaares angeordnete und insbesondere als Wellblech ausgebildete Zusatzscheibe gebildet sind. Auch ist es zweckmäßig, wenn zumindest ein Strömungspfadabschnitt einen, zwei oder mehr als zwei zueinander parallel durchströmbare Strömungskanäle aufweist. Auch ist es zweckmäßig, wenn zumindest zwei der Strömungskanäle des zumindest einen Strömungspfadabschnittes über den Umlenkabschnitt miteinander verbunden sind. Auch ist es zweckmäßig, wenn die Strömungskanäle an ihren Stirnseiten verschlossen sind, insbesondere durch eine Begrenzung des ersten Strömungsraums, insbesondere durch eine oder beide Scheiben des Scheibenpaars. Auch ist es zweckmäßig, wenn an einer ersten Trennwand eines ersten Strömungskanals an einer ersten Stirnseite des ersten Strömungskanals ein erster Umlenkabschnitt zu einem zweiten Strömungskanal und an einer zweiten Trennwand des ersten Strömungskanals an einer der ersten Stirnseite gegenüberliegenden zweiten Stirnseite des ersten Strömungskanals ein zweiter Umlenkabschnitt zu einem von dem zweiten Strömungskanal unterschiedlichen dritten Strömungskanal angeordnet sind. Auch ist es zweckmäßig, wenn die Strömungskanäle gemeinsam mit den Umlenkkanälen einen einzigen serpentinenartig mäandrierenden Strömungspfad durch den ersten Strömungsraum bilden. Auch ist es zweckmäßig, wenn der erste und der zweite Strömungsraum in unterschiedlichen Hauptströmungsrichtungen durchströmbar sind. Auch ist es zweckmäßig, wenn der zweite Strömungsraum einen größeren Strömungsquerschnitt als ein Strömungspfadabschnitt des Strömungspfades in dem ersten Strömungsraum, insbesondere einen größeren Strömungsquerschnitt als der erste Strömungsraum aufweist.

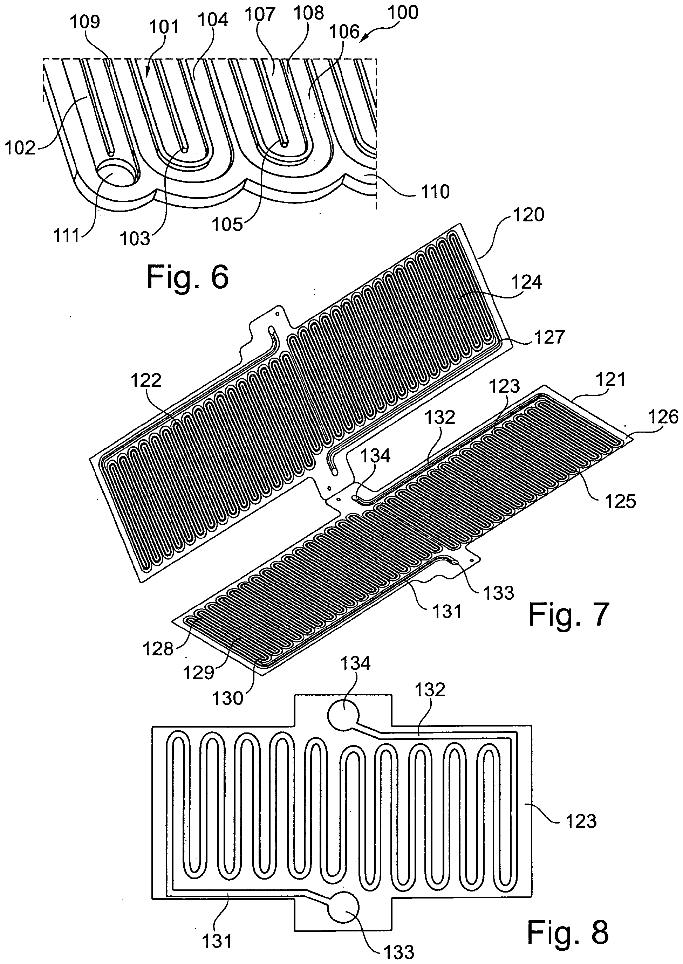

Die Figur 6 zeigt schematisch einen Ausschnitt einer Scheibe 100 mit einem Strömungspfad 101, der aus Strömungspfadabschnitten 102,103, 104, 105 besteht. Der Strömungspfad 101 besteht dabei aus im Wesentlichen mäander- oder schlangenlinienförmig aneinandergereihten Abschnitten 102,103, 104, 105, welche sich über im Wesentlichen die gesamten Ausdehnung der Scheibe 100 aneinander reihen und von einem Rand 110 der Scheibe 100 umgeben sind. Vorteilhaft sind die Strömungspfade 101 bzw. diesbezügliche Abschnitte 102,103, 104, 105 mehrfach parallel ausgeführt, wobei zwischen den einzelnen parallelen Teilpfaden 106,107 ein Steg 108 vorgesehen ist, welcher die Teilpfade 106,107 zumindest abschnittsweise trennt. Weiterhin ist zwischen verschiedenen Abschnitten ein Steg 109 vorgesehen. Im Ausführungsbeispiel der Figur 6 ist die Scheibe 100 durch einen hochstehenden Rand 110 bzw. Steg nach außen abgeschlossen, wobei die Kontur des Rands entweder gerade oder bereichsweise bogenförmig ausgeführt ist. An einem Ende des Strömungspfades 101 ist entweder ein Pfad vorgesehen, um das Fluid von dort zu einem Anschluss zu führen oder um durch eine Öffnung 111 das Fluid direkt abzuleiten.

Die Figur 7 zeigt schematisch eine Anordnung zweier Scheiben 120,121 mit jeweils einem Strömungspfad 122,123, der jeweils aus Strömungspfadabschnitten 124, 125 besteht. Der jeweilige Strömungspfad 122,123 besteht dabei aus im Wesentlichen mäander- oder schlangenlinienförmig aneinandergereihten Abschnitten, welche sich über im Wesentlichen die gesamte Ausdehnung der Scheibe 120,121 aneinander reihen und von einem Rand 126, 127 der Scheibe 100 umgeben sind. Die beiden Scheiben sind dabei im Wesentlichen spiegelbildlich ausgeführt, so dass die Kanäle bzw. Strömungspfade 122 der ersten Scheibe 120 auf den Strömungspfaden 123 der zweiten Scheibe 121 zu liegen kommen, wenn diese aufeinander gelegt werden. Dabei werden die Schieben vorteilhaft an den Rändern und/oder im Bereich von Stegen zwischen den Pfadabschnitten verlötet, um eine geschlossene Scheibe mit Strömungspfad zu bilden. Auch sind die Strömungspfade 122,123 bzw. diesbezügliche Abschnitte 124, 125 mehrfach parallel ausgeführt, wobei zwischen den einzelnen parallelen Teilpfaden 128,129 ein Steg 130 vorgesehen ist, welcher die Teilpfade 128,129 zumindest abschnittsweise trennt. An den Enden des jeweiligen mäander- oder schlangenlinienförmigen Strömungspfades 122,123 einer Scheibe 120,121 ist ein Pfad 131,132 vorgesehen, um das Fluid von dem Ende des jeweiligen mäander- oder schlangenlinienförmigen Strömungspfades zu einem Anschluss 133,134 zu fuhren. Der Anschluss 133,134 ist dabei vorteilhaft eine Öffnung, durch welche das Fluid ein- bzw. ableitbar ist Die Figur 8 zeigt dies noch einmal schematisch.

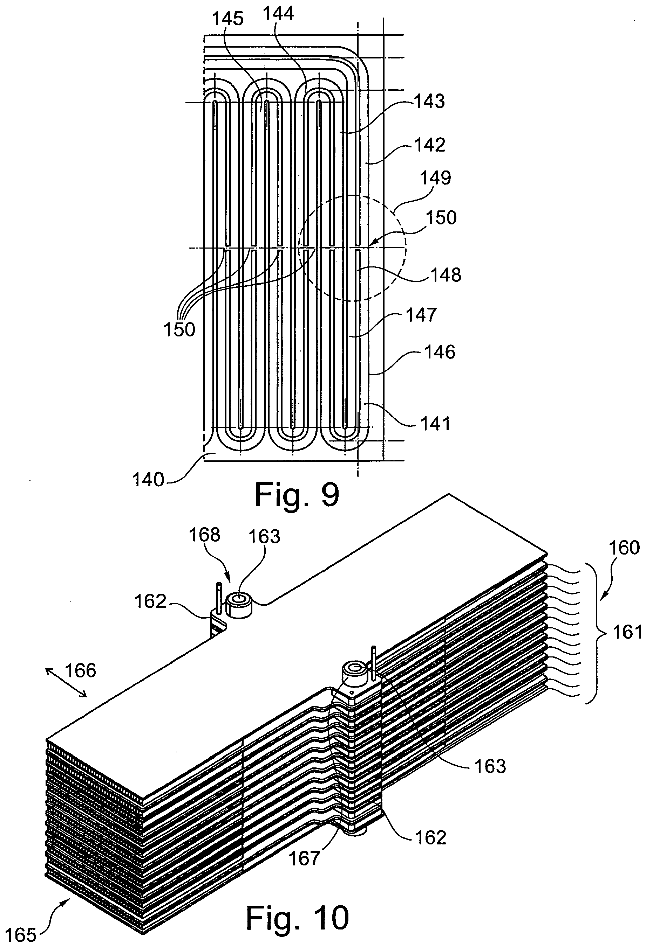

Die Figur 9 zeigt schematisch einen Ausschnitt einer Scheibe 140 mit einem Strömungspfad 141, der zumindest aus Strömungspfadabschnitten 142,143, 144, 145 besteht. Der Strömungspfad 141 besteht dabei auch aus im Wesentlichen mäander- oder schlangenlinienförmig aneinandergereihten Abschnitten 142,143, 144, 145, welche sich über im Wesentlichen die gesamten Ausdehnung der Scheibe aneinander reihen. Vorteilhaft sind die Strömungspfade 141 bzw, diesbezügliche Abschnitte 102,103, 104, 105 mehrfach, wie beispielsweise zweifach, parallel ausgeführt, wobei zwischen den einzelnen parallelen Teilpfaden 146,147 ein Steg 148 vorgesehen ist, welcher die Teilpfade 146,147 zumindest abschnittsweise trennt. Wie in dem markierten Bereich 149 zu erkennen ist, ist der Steg an vorgesehenen Bereichen unterbrochen, um einen Austausch des Fluids zwischen den Teilpfaden zu erlauben. Diese Unterbrechungen 150 sind vorteilhaft über die Länge des Pfades 141 bzw. der Pfade verteilt angeordnet,

Wie in Figur 9 zu erkennen ist, ist eine Mehrzahl von Unterbrechungen 150 des Stegs vorgesehen, wie zweckmäßig etwa in der Mitte der Abschnitte 142,143, 144, 145 vorgesehen sind. Bei einem anderen Ausführungsbeispiel können die Unterbrechungen auch anderweitig verteilt sein, wie beispielsweise auch mehr als eine Unterbrechung in einem Abschnitt und/oder weniger als eine Unterbrechung in einem Abschnitt.

Die Figur 10 zeigt eine erfindungsgemäße Vorrichtung zur Übertragung von Wärme 160, wie Wärmeübertrager, bei welchem eine Mehrzahl von Scheibenpaaren 161 verlötet zu einem Strömungskanal zusammengesetzt sind und wobei diese Paare von Scheiben 161 unter Zwischenschaltung von einer jeweiligen Rippenlage 164 aufeinander gestapelt sind. Wie zu erkennen ist, sind eine Vielzahl von Scheibenpaaren mit Rippen abwechselnd aufeinander gestapelt und zu einem Wärmeübertrager verbunden.

Die Scheiben 161 weisen dabei seitlich angeordnete Erweiterungen 162 auf, in welchen Öffnungen oder Stutzen 163 zur Zu- und Abführung eines Fluids vorgesehen sind. Vorteilhaft sind die Öffnungen 163 der einzelnen Scheibenpaare 161 übereinander fluchtend angeordnet und mittels Verbindungsmitteln 164 miteinander verbunden. Dabei ist es besonders vorteilhaft, wenn alle Scheibenpaare oder auch nur eine geringere Anzahl einzelner Scheibenpaare parallel geschaltet und durchströmt werden. Auch kann es vorteilhaft sein, wenn alle Scheibenpaare oder auch nur eine geringere Anzahl von Scheibenpaaren seriell durchströmt werden. Bei einem weiteren Ausführungsbeispiel kann es durchaus vorteilhaft sein, wenn einzelne Scheibenpaare parallel durchströmt werden und diese wiederum seriell mit anderen parallel durchströmten Paaren verschaltet sind.

Die Rippenlagen 164 sind vorteilhaft als gewalzte Rippenlage ausgebildet, deren Durchströmungsrichtung 165 im Wesentlichen senkrecht zur Hauptdurchströmungsrichtung 166 der Scheibenpaare 161 ausgerichtet ist.

Der Wärmeübertrager 160 weist somit Kanäle auf, die in den Scheibenpaaren 161 angeordnet sind und durch welche ein Fluid strömt und erweist weiterhin weitere Kanäle auf zwischen zumindest zwei Scheibenpaaren 161, durch welches ein zweites Fluid strömt. Das erste Fluid ist vorteilhaft ein flüssiges Kühlmittel und das zweite Fluid ist vorteilhaft ein Gas, wie ein Abgas. Das flüssige Kühlmittel kann dabei zwischen dem Einlass 167 und dem Auslass 168 verdampfen, so dass es flüssig in den Wärmeübertrager geleitet wird und gasförmig aus dem Wärmeübertrager entweicht. Im Falle des Wechsels des Aggregatzustands des ersten Fluids ist es vorteilhaft, wenn der Querschnitt des Auslasses 168 größer ist als der Querschnitt des Einlasses 167.

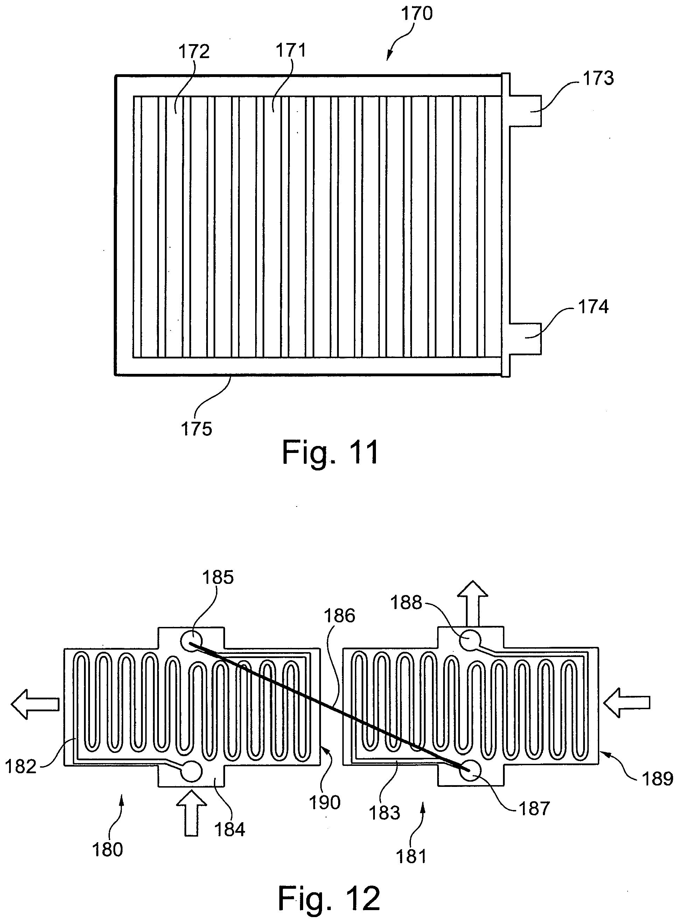

Die Figur 11 zeigt schematisch die Anordnung des Wärmeübertragers 170, bei welchem sich Bereiche 171 mit Strömungspfaden des ersten Fluids mit Bereichen 172 mit Strömungspfaden des zweiten Fluids abwechseln. Dabei sind weiterhin zwei Stutzen 173,174 zu erkennen, welche als Einlass- bzw. als Auslassstutzen für die Zuführung bzw. Abführung des ersten Fluids dienen.

Der Wärmeübertrager 170 weist weiterhin ein Gehäuse 175 auf, welches den Block mit Bereichen 171,172 mit Strömungskanälen aufnimmt und somit für die Durchströmung des zweiten Fluids durch die Strömungskanäle eine Führung bietet. Nicht zu erkennen sind beispielsweise Stutzen für die Zuführung und die Abführung des zweiten Fluids.

Die Figur 12 zeigt schematisch eine Anordnung zweier seriell durchströmter Stapel aus Scheibenpaaren 180,181 mit jeweils einem Strömungspfad. Wie zu erkennen ist, wird das erste Fluid in einem Eintritt 184 des Scheibenpaares 180 zugeführt. Es strömt durch den Strömungspfad 182 zu dem Auslass 185 des Scheibenpaares 180, von dort durch eine Strörnungspfadverbindung 188 in einen Eintritt 187 des zweiten Scheibenpaares 181. Es strömt von dort wiederum durch den Strömungspfad 183 des zweiten Scheibenpaares 183 zu dem Auslass 188, bevor es abfließt. Gleichzeitig werden die Strömungspfade 189,190 für das zweite Fluid, wie beispielsweise Abgas, seriell durchströmt, wie es angedeutet ist.

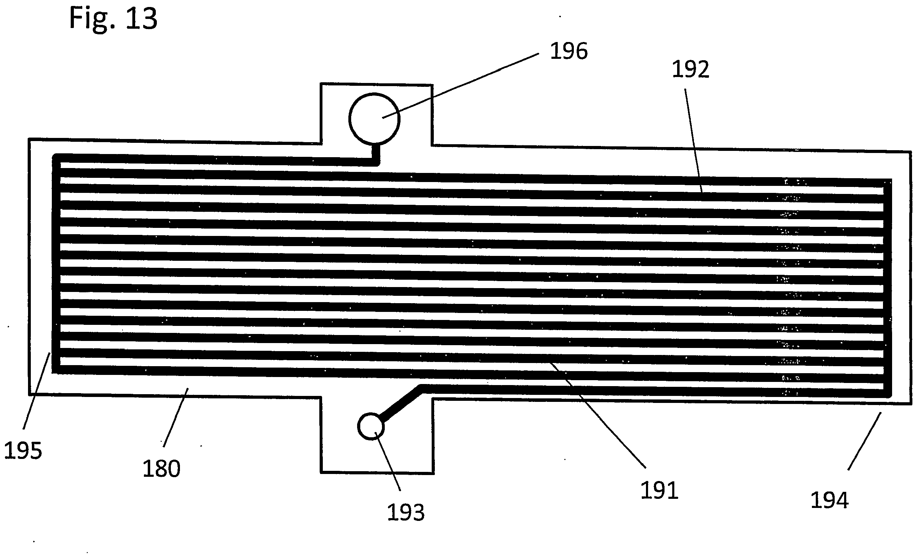

Die Fig. 13 zeigt schematisch eine Scheibe 180, wobei der erste Strömungspfad 191 mehrere Strömungspfadabschnitte 192 aufweist, die nicht nur im Wesentlichen parallel zueinander angeordnet sind, sondern auch in der Art einer Parallelschaltung miteinander verschaltet sind. Das erste Medium strömt daher von einem Einlass 193 zu einem Verteilkanal 194, wird von dort auf mehrere Strömungspfadabschnitte 192 aufgeteilt und strömt in entgegengesetzter Richtung zu einem Auslasskanal 195, bevor es über einen Auslass 196 abfließt.

Erfindungsgemäß ist es zweckmäßig, wenn die Scheiben aus Metall, wie aus Stahl oder Edelstahl hergestellt sind bzw. bestehen. Dabei ist es besonders zweckmäßig, wenn die Strömungspfade zwischen Scheiben eines Scheibenpaares durch Ätzen in die Scheiben eingebracht sind, so dass sich eine Kanalstruktur ergibt, durch welche das erste Fluid gezielt fließt. Die Scheiben können auch aus drei oder mehr Lagen aufgebaut werden, wobei die mittlere Scheibe oder die mittleren Scheiben durchgehende Schlitze aufweist, die die beschriebene Kanalstruktur bilden und eine glatte obere und untere Scheibe die Kanalstruktur abdichten.

Vorteilhaft wird der Wärmeübertrager eingesetzt für die Wärmerückgewinnung aus Abgas und dient dabei der Effizienzsteigerung von Verbrennungsmotoren. Eine Möglichkeit ist die Anwendung eines Rankine-Prozesses und für diesen Prozess wird ein Wärmeübertrager als Abgas-Verdampfer benötigt.

Dabei ist die Strömungsführung in dem Verdampfer ausschlaggebende Kriterium für die Leistungsfähigkeit und die Festigkeit dieser Komponente.

Der Wärmeübertrager, vorteilhaft auch als Abgasverdampfer, wird aus verlöteten Scheibenpaaren mit darin eingeätzten Strukturen als Strömungspfade mit sich zwischen den Scheibenpaaren bildenden Strömungspfaden aufgebaut, d.h. es werden abwechselnd die Kanäle für die Strömungsführung von Wasser/Dampf und von Abgas angeordnet. Die beiden Fluide strömen vorteilhaft im Gegenstrom oder im Kreuzstrom oder im Kreuzgegenstrom.

Das erste Fluid strömt mäanderförmig durch die in den Scheibenpaaren gebildeten Strömungspfade. Aus den Scheibenpaaren wird mit dazwischen liegenden Gasrippen ein Stapel aufgebaut und verlötet. Dieser Stapel wird vorteilhaft gegebenenfalls noch in ein Gehäuse eingesetzt.

Vorteilhaft ist es erfindungsgemäß, wenn die Strukturen in den Scheiben der Scheibenpaare durch Ätzen, Fräsen oder Prägen hergestellt werden, so dass die zwischen den Scheiben eines Scheibenpaares vorgesehenen Strömungspfade durch Ätzen herstellbar sind. Dabei ist es, wie oben beschrieben vorteilhaft, wenn die Strömungspfade aus zumindest zwei oder mehr parallel verlaufenden Kanälen mit Zwischensteg bestehen, was die Druckfestigkeit der Scheibenpaare erhöht. Vorteilhaft ist weiterhin, wenn die so genannten Zwischenstege einzelne oder mehrere Unterbrechungen zwischen den parallel verlaufenden Strömungspfaden bzw. Teilströmungspfaden aufweisen, um einen Druckausgleich zwischen ihnen zu ermöglichen.

Weiterhin ist es vorteilhaft, wenn der Wärmeübertrager aus einer Anzahl von Blöcken ausgebildet ist, welche aus Scheibenpaaren und dazwischen angeordneten Rippen bestehen, welche zueinander in Reihe geschaltet sind, um dadurch eine thermische Dehnung zu reduzieren.

Weiterhin ist es vorteilhaft, wenn der Einlass und/oder der Auslass sich im Wesentlichen in Kühlerlängsrichtung gesehen auf gleicher Höhe des Scheibenpaares befinden und/oder vorteilhaft in Scheibenmitte des Scheibenpaares befinden, um eine thermische Ausdehnung der Scheiben in der Längsrichtung nicht allzu stark zu behindern. Dadurch wird ein beispielsweise mittiges Festlager und lose Enden gebildet.

Unter Scheibenmitte wird erfindungsgemäß ein Bereich verstanden, der sich von der geometrischen Mitte des Wärmeübertragers in beide Längsrichtungen 0 bis 20 Prozent, bevorzugt 0 bis 10 Prozent der gesamten Länge des Wärmeübertragers erstreckt.

Weiterhin ist es vorteilhaft, wenn der Einlass und/oder der Auslass seitlich an dem Wärmeübertrager angeordnet sind, um die Gasströmung nicht zu behindern.

Vorteilhaft kann es auch sein, wenn der erste Strömungspfad jeweils zumindest ein Element aufweist, das ausgebildet ist, um einen erhöhten Druckverlust zu erzeugen. Das Element ist hierbei bevorzugt als Düse, Blende oder als Labyrinth ausgebildet. Dies sorgt für eine gleichmäßige Mediumverteilung des ersten Mediums auf die jeweiligen ersten Strömungsräume.

Vorteilhaft ist es, die Geometrie der Medienkanäle an den lokalen Aggregatszustand anzupassen, da die Dichte von Dampf wesentlich geringer als die der Flüssigkeit ist und sich dadurch andere Anforderungen an die wärmeübertragende Fläche ergeben. Dies kann durch eine Veränderung des Querschnitts oder Parallelschaltung mehrerer Mediumkanäle erfolgen.

Vorteilhaft ist auch, wenn der Auslassdurchmesser größer ist als der Einlassdurchmesser, um den Druckverlust zu reduzieren.

Auch kann vorteilhaft die Gasrippe in ihrer Längsrichtung variabel hinsichtlich Rippendichte, Rippenteilung, etc. gestaltet sein, um den Wärmeeintrag in das zweite Fluid je nach Fluidzustand zu verändern.

Vorteilhaft ist das Scheibenpaar und der darin vorzusehende Strömungspfad durch zwei Scheiben oder Platten mit nur einer Lötebene hergestellt.

## Patentansprüche

1. Vorrichtung zum Austausch von Wärme zwischen einem ersten und einem zweiten Medium, mit in einer Stapelrichtung aufeinandergestapelten Scheibenpaaren, wobei zwischen den zumindest zwei Scheiben zumindest eines Scheibenpaares oder mehrerer Scheibenpaare ein von einem ersten Medium durchströmbarer erster Strömungsraum und zwischen zwei zueinander benachbarten Scheibenpaaren ein von einem zweiten Medium durchströmbarer zweiter Strömungsraum ausgebildet sind, wobei der erste Strömungsraum einen ersten Strömungspfad mit nacheinander in entgegengesetzten Richtungen durchströmbaren Strömungspfadabschnitten für das erste Medium aufweist, welche durch eine zwischen den zumindest zwei Scheiben des zumindest einen Scheibenpaares angeordnete Trennwand voneinander getrennt sind und wobei der zweite Strömungsraum einen zweiten Strömungspfad für das zweite Medium aufweist, wobei zumindest der erste Strömungspfad und/oder zumindest einzelne der Strömungspfadabschnitte durch Ätzen zumindest einer Oberfläche einer Scheibe eines Scheibenpaares gebildet ist bzw. sind, wobei der Strömungspfad aus Strömungspfadabschnitten besteht, die im Wesentlichen mäander- oder schlangenlinienförmig aneinandergereihte Abschnitte bilden, welche sich im Wesentlichen über die gesamte Ausdehnung der Scheibe aneinander reihen und von einem Rand der Scheibe umgeben sind, wobei der erste und/oder der zweite Strömungspfad und/oder zumindest einzelne, deren Strömungspfadabschnitte aus zwei parallel verlaufenden Kanälen bestehen, durch einen Steg voneinander getrennt sind, **dadurch gekennzeichnet, dass** der Steg zumindest einzelne oder mehrere Unterbrechungen aufweist.

2. Vorrichtung nach Anspruch 1, **dadurch gekennzeichnet, dass** zumindest der erste Strömungspfad und/oder zumindest einzelne der Strömungspfadabschnitte durch Ätzen zweier gegenüberliegender Oberflächen von zwei Scheiben eines Scheibenpaares gebildet ist bzw. sind.

3. Vorrichtung nach Anspruch 1, **dadurch gekennzeichnet, dass** Mediumein- und -austritt in Kühlerlängsrichtung auf gleicher Höhe angeordnet sind.

4. Vorrichtung nach Anspruch 1, **dadurch gekennzeichnet, dass** der Mediumaustritt einen größeren Querschnitt aufweist als der Mediumeintritt.

5. Vorrichtung nach zumindest einem der vorhergehenden Ansprüche, **dadurch gekennzeichnet, dass** ein Scheibenpaar durch drei oder mehr aufeinander liegende, stoffschlüssig miteinander verbundene Scheiben gebildet wird, wobei zwei äußere Scheiben und zumindest eine mittlere Scheibe vorgesehen sind.

6. Vorrichtung nach Anspruch 5 **dadurch gekennzeichnet, dass** die mittleren Scheiben einen durchgehenden Schlitz aufweisen, der die Kanalstruktur bildet.

## Claims

1. A device for an exchange of heat between a first and a second medium, with pairs of trays stacked one on top of the other in a stacking direction, wherein a first flow chamber through which a first medium is flowable is formed between the at least two trays of at least one pair of trays or several pairs of trays and a second flow chamber through which a second medium is flowable is formed between two pairs of trays adjacent to one another, wherein the first flow chamber has a first flow path with flow path sections that are configured to be flowed through consecutively in opposite directions for the first medium, and which are separated from one another by a division wall arranged between the at least two trays of the at least one pair of trays, and wherein the second flow chamber has a second flow path for the second medium, wherein at least the first flow path and/or at least some of the flow path sections is or are formed by etching of at least one surface of a tray of a pair of trays, wherein the flow path consists of flow path sections which substantially form sections which are arranged in a row in a meander shape or sinuous line and which are arranged in a row substantially across the full expansion of the tray and are surrounded by an edge of the tray, wherein the first and/or the second flow path and/or at least some of them whose flow path sections are composed of two channels running parallel are separated from one another by a web, **characterised in that** the web has at least individual or several interruptions.

2. The device according to claim 1, **characterised in that** at least the first flow path and/or at least some of the flow path sections is or are formed by etching of two opposite surfaces of two trays of a pair of trays.

3. The device according to claim 1, **characterised in that** the medium inlet and outlet are arranged at a same height in a cooler longitudinal direction.

4. The device according to claim 1, **characterised in that** the medium outlet has a larger cross-section than the medium inlet.

5. The device according to at least one of the preceding claims, **characterised in that** a pair of trays is formed by three or more trays lying one on top of the other and connected to one another by an adhesive force, wherein two outer trays and at least one centre tray are provided.

6. The device according to claim 5, **characterised in that** the centre trays have a through slot that forms the channel structure.

## Revendications

1. Dispositif pour l'échange de chaleur entre un premier milieu et un second milieu, ledit dispositif comprenant des paires de plaques empilées les unes sur les autres suivant une direction d'empilage, où un premier espace d'écoulement pouvant être traversé par un premier milieu est configuré entre les plaques au moins au nombre de deux d'au moins une paire de plaques ou de plusieurs paires de plaques, un deuxième espace d'écoulement pouvant être traversé par un second milieu étant configuré entre deux paires de plaques contiguës l'une à l'autre, où le premier espace d'écoulement présente un premier trajet d'écoulement comprenant, pour le premier milieu, des tronçons de trajet d'écoulement pouvant être traversés successivement dans des directions opposées, tronçons de trajet d'écoulement qui sont séparés les uns des autres par une paroi de séparation disposée entre les plaques au moins au nombre de deux de la paire de plaques au moins au nombre de un, et où le deuxième espace d'écoulement présente, pour le second milieu, un deuxième trajet d'écoulement, où au moins le premier trajet d'écoulement et / ou au moins certains parmi les tronçons de trajet d'écoulement est ou sont formé(s) par décapage d'au moins une surface d'une plaque d'une paire de plaques, où le trajet d'écoulement se compose de tronçons de trajet d'écoulement qui forment des tronçons essentiellement en forme de méandres ou de serpentins et disposés en rangées alignées les unes à côté des autres, tronçons qui sont disposés en rangées alignées les unes à côté des autres essentiellement sur la totalité de l'étendue de la plaque, et qui sont entourés par un bord de la plaque, où le premier et / ou le deuxième tronçon d'écoulement et / ou au moins certains parmi leurs tronçons de trajet d'écoulement, qui se composent de deux conduits s'étendant parallèlement, sont séparés l'un de l'autre par une barrette, **caractérisé en ce que** la barrette présente au moins certaines ou plusieurs interruptions.

2. Dispositif selon la revendication 1, **caractérisé en ce qu'**au moins le premier trajet d'écoulement et / ou au moins certains parmi les tronçons de trajet d'écoulement est ou sont formé(s) par décapage de deux surfaces opposées de deux plaques d'une paire de plaques.

3. Dispositif selon la revendication 1, **caractérisé en ce que** l'entrée et la sortie du milieu sont disposées à la même hauteur dans la direction longitudinale du refroidisseur.

4. Dispositif selon la revendication 1, **caractérisé en ce que** la sortie du milieu présente une section plus grande que celle de l'entrée du milieu.

5. Dispositif selon au moins l'une quelconque des revendications précédentes, **caractérisé en ce qu'**une paire de plaques est formée par trois plaques, ou plus, placées les unes au-dessus des autres et assemblées les unes aux autres par continuité de matière, où il est prévu deux plaques extérieures et au moins une plaque située au milieu.

6. Dispositif selon la revendication 5, **caractérisé en ce que** les plaques situées au milieu présentent une fente continue qui forme la structure des conduits.
